Europäisches Patentamt

(19) **European Patent Office**

**Office européen des brevets**

(11) Numéro de publication: **0 143 032**
**B1**

(12) **FASCICULE DE BREVET EUROPEEN**

(45) Date de publication du fascicule du brevet:
**20.04.88**

(51) Int. Cl.⁴: **F 16 H 55/44**, B 21 H 1/04

(21) Numéro de dépôt: **84402113.9**

(22) Date de dépôt: **19.10.84**

(54) **Procédé de fabrication d'une poulie à gorges multiples en v et poulie ainsi réalisée.**

(30) Priorité: **21.10.83 FR 8316814**

(43) Date de publication de la demande:
**29.05.85 Bulletin 85/22**

(45) Mention de la délivrance du brevet:
**20.04.88 Bulletin 88/16**

(84) Etats contractants désignés:
**AT BE CH DE GB IT LI LU NL SE**

(56) Documents cités:
**EP - A - 0 126 489**
**FR - A - 2 254 383**
**FR - A - 2 261 459**
**FR - A - 2 488 534**
**FR - A - 2 507 931**

**PATENTS ABSTRACTS OF JAPAN, vol. 7, no. 173**
**(M-232)(1318), 30 juillet 1983**

(73) Titulaire: **AUBECQ AUXI S.A., F-62390 Auxi-le-Chateau (FR)**

(72) Inventeur: **Guevel, Guy, 3, Avenue du Bois,**
**F-62390 Auxi-Le-Chateau (FR)**
Inventeur: **Dufresne, Louis, 1, Avenue du Bois,**
**F-62390 Auxi-Le-Chateau (FR)**
Inventeur: **Foucher, Hervé, 46, Avenue Foch,**
**F-62390 Auxi-Le-Chateau (FR)**

(74) Mandataire: **Bressand, Georges et al, c/o CABINET**
**LAVOIX 2 Place d'Estienne d'Orves, F-75441 Paris**
**Cedex 09 (FR)**

## Description

### Version A

Les poulies à gorges multiples à profil en V comportent, actuellement, un flanc cylindrique à la surface extérieure duquel sont formées des gorges en V, et qui est solidaire d'une âme de liaison à un moyeu.

Ces poulies sont habituellement fabriquées (FR-A-2 507 931) à partir d'un disque plat en tôle qui est embouti et étiré, de sorte qu'elles ont une épaisseur de paroi relativement mince et que le moyeu doit obligatoirement être rapporté par soudure, ce qui est onéreux.

En outre, l'âme de la poulie est déportée par rapport à la zone de tension de la courroie, des ruptures risquent donc de se produire à la base de la poulie.

Par ailleurs, la forme en coupelle de ces poulies interdit leur utilisation dans certains dispositifs pour des raisons de difficultés de montage ou d'encombrement.

Il est également connu (EP-A-126 489, compris dans l'état de la technique selon l'Article 54 (3) C.B.E.) de fabriquer des poulies à gorges multiples en fendant et comprimant la portion périphérique d'un disque plat circulaire pour la transformer en un flanc annulaire en saillie de part et d'autre de son plan général, des gorges étant ensuite formées dans ce flanc.

La poulie a alors une âme centrale, ce qui facilite le montage et réduit les risques de rupture sous l'action d'une tension déportée. Toutefois ces poulies comme les précédentes ont tendance à se rompre et manquent de résistance, ce qui limite considérablement leur domaine d'application.

La présente invention a pour but de remédier à ces inconvénients grâce à un procédé de fabrication qui permet de réaliser des poulies à gorges multiples en V, ou poulies poly V, comportant une âme centrale et ayant à volonté, pas de moyeu, un moyeu d'une seule pièce, ou un moyeu rapporté, tout en répondant aux exigences de légèreté et de résistance de leur utilisation.

Cette invention a en effet pour objet un procédé de fabrication de poulie à plusieurs gorges en V, selon le préambule de la revendication 1, qui présente les caractéristiques mentionnées dans la partie caractérisante de la revendication 1, dans le jeu A de revendications (pour les Etats contractants DE, GB et IT).

### Version A et B

Selon un mode de mise en œuvre préféré on fait fluer le métal de la portion périphérique du disque de part et d'autre du plan du disque, par contact avec des galets, et le flanc cylindrique a une épaisseur définie, indépendante de celle de l'âme de la poulie.

En choisissant de manière appropriée le diamètre et l'épaisseur du disque initial, il est possible d'obtenir non seulement des poulies de diamètre et d'épaisseur variables, mais également des poulies ayant des flancs cylindriques de hauteur différente, susceptibles de recevoir une ou plusieurs séries de gorges en V.

Selon une variante de mise en œuvre, le disque initial est fendu à sa périphérie, selon un plan perpendiculaire à son axe, puis on fait fluer le métal des deux lèvres de la fente en sens inverse, dans le prolongement l'une de l'autre pour former un flanc cylindrique, en saillie de part et d'autre de l'âme centrale, et recevoir les gorges en V.

Dans ce cas, comme dans le précédent, la poulie obtenue présente une âme centrale d'une seule pièce avec un flanc périphérique s'étendant de part et d'autre de cette âme et ayant une épaisseur différente de la sienne.

Description est donnée ci-dessous d'exemples de mise en œuvre illustrés aux dessins annexés. Sur ces dessins:

- la fig. 1 montre schématiquement, en coupe radiale, un disque plat déjà muni d'un moyeu avant sa déformation;
- la fig. 2 est une vue analogue d'une poulie terminée;
- la fig. 3 est une vue analogue d'une poulie comportant plusieurs séries de gorges;
- les fig. 4 et 5 sont des vues analogues illustrant deux phases d'une variante du procédé de fabrication.

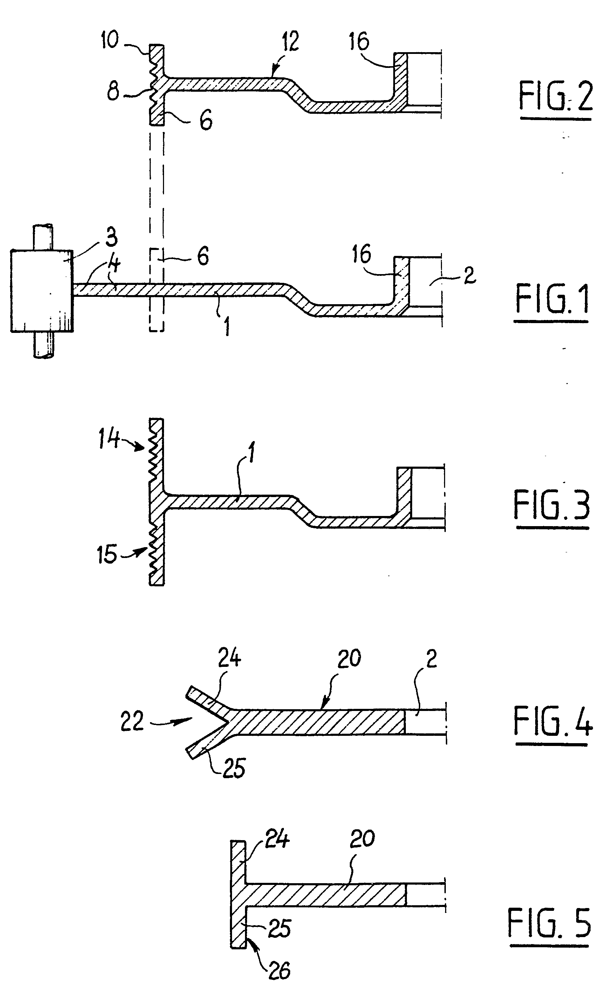

Comme le montre la figure 1, une poulie selon l'invention est réalisée à partir d'un disque plat 1, en tôle, ayant un diamètre nettement supérieur à celui de la poulie à obtenir. Le disque 1 comporte un trou central 2 et constitue l'âme de la poulie qui peut être reliée à un moyeu.

Le disque 1 est monté sur un support rotatif entre des galets de formage cylindriques 3, qui appuient sur son bord extérieur 4. Au fur et à mesure du déplacement relatif de ces galets et du disque 1, le métal constituant la portion périphérique du disque flue à la fois vers le haut et vers le bas et fait saillie de part et d'autre de l'âme centrale 1. Il se forme un flanc cylindrique régulier, sensiblement symétrique par rapport au plan général du disque initial 1, comme indiqué en trait mixte en 6 sur la figure 1.

Une série de gorges à profil en V 8 sont alors formées par tout moyen approprié, et de préférence au moyen d'autres galets de formage, dans la face extérieure 10 du flanc 6 pour donner à la poulie 12 sa forme définitive.

Bien entendu, la course et la dimension du galet sont choisies de façon à donner au flanc 6 la hauteur axiale nécessaire pour la formation des gorges.

Comme le montrent les figures 2 et 3, la poulie peut ne comporter qu'une seule série de gorges 8 ou en comporter davantage, par exemple deux séries 14, 15 formées chacune sur l'une des ailes du flanc cylindrique 6. La poulie peut alors recevoir plusieurs courroies qui agissent de préférence de manière symétrique de part et d'autre de son âme centrale.

De même, on constate qu'il est possible, grâce à ce procédé, de réaliser des poulies de faible diamètre aussi bien que des poulies plus importantes.

Par ailleurs, le fluage du métal sous l'action des galets 2 donne au flanc 6 une épaisseur nettement supérieure à celle du disque de départ, de sorte que, par exemple, un disque en tôle de 2 mm permet d'obtenir une poulie dont le flanc 6 a une épaisseur de 4 mm. Une telle différence assure une utilisation optimale de la matière puisque l'épaisseur du flanc facilite la formation des gorges, tandis que la minceur de l'âme allège l'ensemble de la poulie. Elle est toutefois déterminée par la nature de l'utilisation et les caractéristiques désirées. Notamment, une âme très mince est préférée lorsqu'elle doit être assemblée à un moyeu rapporté, tandis qu'une âme plus épaisse permet la formation du moyeu dans le disque lui-même, comme représenté sur les figures 1 à 3. Le moyeu 16 est, dans ce dernier cas, de préférence formé au centre du disque 1, au cours d'une phase préalable de la fabrication et la poulie terminée présente le grand avantage d'être entièrement d'une seule pièce.

Selon une variante, qui est tout particulièrement utile lorsque l'on a besoin d'une poulie ayant une âme relativement épaisse, ce qui est notamment le cas lorsque l'on veut former le moyeu directement dans le disque initial, mais qui est également adapté aux autres types de poulie ainsi que le montrent les figures 4 et 5, le disque 20 est d'abord fendu perpendiculairement à son axe en 22, dans sa portion périphérique, pour former deux lèvres 24, 25 ayant chacune une épaisseur moitié de celle du disque initial ou de l'âme centrale. Les lèvres 24 et 25 sont ensuite repoussées au moyen de galets de formage, en sens inverse dans le prolongement l'une de l'autre pour constituer un flanc cylindrique 26, en saillie de part et d'autre de l'âme 20. Une ou plusieurs séries de gorges en V sont ensuite formées dans la face extérieure de ce flanc, de la même manière que dans le flanc 6.

Comme précédemment, la poulie terminée présente une grande résistance et un bon équilibre, et est facile à monter dans les appareils les plus divers et notamment sur des véhicules automobiles. Son poids et son encombrement sont toutefois plus importants en raison de l'épaisseur nettement plus élevée de l'âme 20. Sa fabrication reste simple et s'effectue également sans nécessiter d'opération d'emboutissage ni d'enlèvement de matière.

Version B

Les poulies à gorges multiples à profil en V comportent, actuellement, un flanc cylindrique à la surface extérieure duquel sont formées des gorges en V, et qui est solidaire d'une âme latérale de liaison à un moyeu. Ces poulies sont habituellement fabriquées, comme décrit dans le FR-A-2 507 931, à partir d'un disque plat en tôle qui est embouti et étiré, de sorte qu'elles ont une épaisseur de paroi relativement mince et que le moyeu doit obligatoirement être rapporté par soudure, ce qui est onéreux.

En outre, l'âme de la poulie étant déportée par rapport à la zone de tension de la courroie, des ruptures risquent de se produire à la base de la poulie.

Par ailleurs, la forme en coupelle de ces poulies interdit leur utilisation dans certains dispositifs pour des raisons de difficultés de montage ou d'encombrement.

La présente invention a pour but de remédier à ces inconvénients grâce à un procédé de fabrication qui permet de réaliser des poulies à gorges multiples en V, ou poulies poly V, comportant une âme centrale et ayant à volonté, pas de moyeu, un moyeu d'une seule pièce, ou un moyeu rapporté tout en répondant aux exigences de légèreté et de résistance de leur utilisation.

Cette invention a en effet pour objet un procédé de fabrication de poulie selon le préambule de la revendication 1, qui présente les caractéristiques mentionnées dans la partie caractérisante de cette revendication 1, dans le jeu B de revendications (pour les Etats contractants AT, BE, CH, LI, LU, NL et SE).

Le disque initial peut facilement avoir une épaisseur suffisante pour permettre de former un moyeu directement sur lui. Par contre, les risques de rupture sous l'action d'une tension déportée sont réduits, tandis que le montage est facilité.

## Revendications pour les Etats contractants AT, BE, CH, LI, LU, NL, SE

1. Procédé de fabrication d'une poulie à gorges multiples en V, selon lequel on transforme la portion périphérique d'un disque plat circulaire en un flanc cylindrique coaxial au disque initial et on forme des gorges dans la face extérieure de ce flanc, caractérisé en ce qu'il consiste à faire fluer le métal de la portion périphérique du disque (1) de part et d'autre de son plan général, jusqu'à former un flanc cylindrique (6), en saillie de part et d'autre d'une âme centrale, au moins une série de gorges en V (8, 14, 15) étant ensuite formée dans la face extérieure du flanc cylindrique.

2. Procédé suivant la revendication 1, caractérisé en ce qu'on donne au flanc cylindrique (6) une épaisseur différente de celle de l'âme centrale (1).

3. Procédé suivant l'une des revendications 1 et 2, caractérisé en ce qu'on fait fluer le métal de la portion périphérique du disque (1) de part et d'autre de son plan initial en le repoussant au moyen de galets cylindriques (3).

4. Procédé suivant la revendication 3, caractérisé en ce que le disque initial a un diamètre supérieur à celui de la poulie à réaliser, augmenté de la hauteur du flanc au-dessus de cette âme, de sorte que l'épaisseur du flanc est indépendante de celle de l'âme de la poulie.

5. Procédé suivant l'une des revendications 1 et 2, caractérisé en ce qu'on fend d'abord la portion périphérique du disque, perpendiculairement à son axe, puis on fait fluer le métal des deux lèvres (24, 25) de la fente dans le prolongement l'une de l'autre pour former un flanc cylindrique (26).

6. Procédé suivant l'une des revendications précédentes caractérisé en ce qu'un moyeu est préalablement formé au centre du disque d'une seule pièce avec lui.

7. Poulie d'une seule pièce, à gorges multiples en V, fabriquée selon un procédé suivant l'une des revendications 1 à 6, caractérisée en ce qu'elle comporte un flanc cylindrique (6, 26) formé par un fluage du métal qui porte au moins une série de gorges et fait saillie de part et d'autre d'une âme centrale (1, 20) dont l'épaisseur est indépendante de celle du flanc.

8. Poulie suivant la revendication 7, caractérisée en ce que l'épaisseur du flanc portant les gorges est supérieure à celle de l'âme.

9. Poulie suivant la revendication 7, caractérisée en ce que l'épaisseur du flanc (26) portant les gorges est inférieure à celle de l'âme.

10. Poulie suivant l'une des revendications 7 à 9, caractérisée en ce qu'elle comporte plusieurs séries de gorges en V.

**Revendications pour les Etats contractants DE, GB, IT**

1. Procédé de fabrication d'une poulie à gorges-multiples en V, selon lequel on transforme la portion périphérique d'un disque plat circulaire (1) en un flanc annulaire coaxial au disque initial, en saillie de part et d'autre d'une âme centrale, puis on forme des gorges dans la face extérieure de ce flanc, caractérisé en ce qu'il consiste à faire fluer le métal de la portion périphérique du disque (1) de part et d'autre de son plan général, jusqu'à former un flanc cylindrique (6), au moins une série de gorges en V (8, 14, 15) étant ensuite formée dans la face extérieure de ce flanc cylindrique.

2. Procédé suivant la revendication 1, caractérisé en ce qu'on donne au flanc cylindrique (6) une épaisseur différente de celle de l'âme centrale (1).

3. Procédé suivant l'une des revendications 1 et 2, caractérisé en ce qu'on fait fluer le métal de la portion périphérique du disque (1) de part et d'autre de son plan initial en le repoussant au moyen de galets cylindriques (3).

4. Procédé suivant la revendication 3, caractérisé en ce que le disque initial a un diamètre supérieur à celui de la poulie à réaliser, augmenté de la hauteur du flanc au-dessus de cette âme, de sorte que l'épaisseur du flanc est indépendante de celle de l'âme de la poulie.

5. Procédé suivant l'une des revendications 1 et 2, caractérisé en ce qu'on fend d'abord la portion périphérique du disque (20) perpendiculairement à son axe, puis on fait fluer le métal des deux lèvres (24, 25) de la fente dans le prolongement l'une de l'autre pour former un flanc cylindrique (26).

6. Procédé suivant l'une des revendications précédentes, caractérisé en ce qu'un moyeu est préalablement formé au centre du disque d'une seule pièce avec lui.

7. Poulie d'une seule pièce, à gorges multiples en V, et à une âme centrale fabriquée selon un procédé suivant l'une des revendications 1 à 6, caractérisée en ce qu'elle comporte un flanc cylindrique (6, 26) formé par un fluage du métal qui porte au moins une série de gorges et fait saillie de part et d'autre d'une âme centrale (1, 20) dont l'épaisseur est indépendante de celle du flanc.

8. Poulie suivant la revendication 7, caractérisée en ce que l'épaisseur du flanc portant les gorges est supérieure à celle de l'âme.

9. Poulie suivant la revendication 7, caractérisée en ce que l'épaisseur du flanc (26) portant les gorges est inférieure à celle de l'âme.

10. Poulie suivant l'une des revendications 7 à 9, caractérisée en ce qu'elle comporte plusieurs séries de gorges en V.

**Patentansprüche (für die Vertragsstaaten DE, GB, IT, AT)**

1. Herstellungsverfahren für eine Riemenscheibe mit Mehrfachkeilen in V-Form, nach dem man den Umfangsteil einer flachen Kreisscheibe (1) in eine ringförmige Seite umwandelt, die zu der Ursprungsscheibe koaxial ist, im Vorsprung auf beiden Seiten eines Mittelsteges, und dann die Keile in der Außenfläche der Seite bildet, dadurch gekennzeichnet, daß es darin besteht, das Metall des Umfangteils der Scheibe (1) auf beiden Seiten ihrer Hauptebene ausfließen zu lassen, bis es eine zylindrische Seite (6) bildet, wobei wenigstens eine Gruppe von Keilen in V-Form (8, 14, 15) danach in der Außenfläche der zylindrischen Seite gebildet wird.

2. Verfahren nach Anspruch 1, dadurch gekennzeichnet, daß man der zylindrischen Seite (6) eine Dicke gibt, die sich von der des Mittelstegs (1) unterscheidet.

3. Verfahren nach einem der Ansprüche 1 und 2, dadurch gekennzeichnet, daß man das Metall des Umfangteils der Scheibe (1) auf beiden Seiten ihrer Ursprungsebene ausfließen läßt, indem man es mittels zylindrischer Rollen (6) treibt.

4. Verfahren nach Anspruch 2, dadurch gekennzeichnet, daß die Ursprungsscheibe einen größeren Durchmesser als die herzustellende Riemenscheibe hat, vergrößert in der Länge der Seite über den Steg hinaus, dergestalt, daß die Dicke der Seite unabhängig von der des Stegs der Riemenscheibe ist.

5. Verfahren nach einem der Ansprüche 1 und 2, dadurch gekennzeichnet, daß man zunächst den Umfangsteil der Scheibe (20) senkrecht zu ihrer Achse spaltet, und dann das Metall von den zwei Lippen (24, 25) des Spaltes in die Verlängerung beiderseits ausfließen läßt, um eine zylindrische Seite (26) zu bilden.

6. Verfahren nach einem der vorhergehenden Ansprüche, dadurch gekennzeichnet, daß eine Nabe vorausgehend im Zentrum der Scheibe einstückig mit ihr gebildet wird.

7. Riemenscheibe aus einem Stück, mit Mehrfachkeilen in V-Form, und an einem Mittelsteg hergestellt gemäß einem Verfahren nach einem der Ansprüche 1 bis 6, dadurch gekennzeichnet, daß sie eine zylindrische Seite (6, 26) aufweist, die durch Metallfluß gebildet ist, welche wenigstens eine Gruppe von Keilen trägt und einen Vorsprung auf beiden Seiten des Mittelstegs (1, 20) macht, dessen Dicke unabhängig von der der Seite ist.

8. Riemenscheibe nach Anspruch 7, dadurch gekennzeichnet, daß die Dicke der die Keile tragenden Seite größer als die des Steges ist.

9. Riemenscheibe nach Anspruch 7, dadurch gekennzeichnet, daß die Dicke der die Keile tragenden Seite (26) kleiner als die des Stegs ist.

10. Riemenscheibe nach einem der Ansprüche 7 bis 9, dadurch gekennzeichnet, daß sie mehrere Gruppen von Keilen in V-Form aufweist.

**Patentansprüche (für die Vertragsstaaten DE, GB, IT)**

1. Herstellungsverfahren für eine Riemenscheibe mit Mehrfachkeilen in V-Form, nach dem man den Umfangsteil einer flachen Kreisscheibe (1) in eine ringförmige Seite umwandelt, die zu der Ursprungsscheibe koaxial ist, im Vorsprung auf beiden Seiten eines Mittelsteges, und dann die Keile in der Außenfläche der Seite bildet, dadurch gekennzeichnet, daß es darin besteht, das Metall des Umfangteils der Scheibe (1) auf beiden Seiten ihrer Hauptebene ausfließen zu lassen, bis es eine zylindrische Seite (6) bildet, wobei wenigstens eine Gruppe von Keilen in V-Form (8, 14, 15) danach in der Außenfläche der zylindrischen Seite gebildet wird.

2. Verfahren nach Anspruch 1, dadurch gekennzeichnet, daß man der zylindrischen Seite (6) eine Dicke gibt, die sich von der des Mittelstegs (1) unterscheidet.

3. Verfahren nach einem der Ansprüche 1 und 2, dadurch gekennzeichnet, daß man das Metall des Umfangteils der Scheibe (1) auf beiden Seiten ihrer Ursprungsebene ausfließen läßt, indem man es mittels zylindrischer Rollen (6) treibt.

4. Verfahren nach Anspruch 2, dadurch gekennzeichnet, daß die Ursprungsscheibe einen größeren Durchmesser als die herzustellende Riemenscheibe hat, vergrößert in der Länge der Seite über den Steg hinaus, dergestalt, daß die Dicke der Seite unabhängig von der des Stegs der Riemenscheibe ist.

5. Verfahren nach einem der Ansprüche 1 und 2, dadurch gekennzeichnet, daß man zunächst den Umfangteil der Scheibe (20) senkrecht zu ihrer Achse spaltet, und dann das Metall von den zwei Lippen (24, 25) des Spaltes in die Verlängerung beiderseits ausfließen läßt, um eine zylindrische Seite (26) zu bilden.

6. Verfahren nach einem der vorhergehenden Ansprüche, dadurch gekennzeichnet, daß eine Nabe vorausgehend im Zentrum der Scheibe einstückig mit ihr gebildet wird.

7. Riemenscheibe aus einem Stück, mit Mehrfachkeilen in V-Form, und an einem Mittelsteg hergestellt gemäß einem Verfahren nach einem der Ansprüche 1 bis 6, dadurch gekennzeichnet, daß sie eine zylindrische Seite (6, 26) aufweist, die durch Metallfluß gebildet ist, welche wenigstens eine Gruppe von Keilen trägt und einen Vorsprung auf beiden Seiten des Mittelstegs (1, 20) macht, dessen Dicke unabhängig von der der Seite ist.

8. Riemenscheibe nach Anspruch 7, dadurch gekennzeichnet, daß die Dicke der die Keile tragenden Seite größer als die des Steges ist.

9. Riemenscheibe nach Anspruch 7, dadurch gekennzeichnet, daß die Dicke der die Keile tragenden Seite (26) kleiner als die des Stegs ist.

10. Riemenscheibe nach einem der Ansprüche 7 bis 9, dadurch gekennzeichnet, daß sie mehrere Gruppen von Keilen in V-Form aufweist.

## Claims for the contracting States AT, BE, CH, LI, LU, NL, SE

1. Process of manufacturing a pulley with multiple V-grooves, according to which the peripheral portion of a circular flat disc (1) is transformed into an annular flange which is coaxial to the initial disc, then grooves are formed in the exterior face of this flange, characterised by the fact that it consists of causing the metal of the peripheral portion of the disc (1) to flow on either side of its general plane, until a cylindrical flange (6) is formed, at least one series of V-grooves (8, 14, 15) being then formed into the exterior face of this cylindrical flange.

2. Process according to claim 1, characterised by the fact that a thickness which is different from that of the central web (1) is imparted to the cylindrical flange (6).

3. Process according to any one of the claims 1 and 2, characterised by the fact that the metal of the peripheral portion of the disc (1) is on either side of its initial plane by flowing it by means of cylindrical rollers (3).

4. Process according to claim 3, characterised by the fact that the initial disc has a diameter greater than that of the pulley which is to be made, increased by the height of the flange above this web, in such a way that the thickness of the flange is independent of that of the web of the pulley.

5. Process according to any one of claims 1 and 2, characterised by the fact that first of all the peripheral portion of the disc (20) is split perpendicularly to its axis, then the metal of the two lips (24, 25) of the split is spun formed by flowing the one from the other to form a cylindrical flange (26).

6. Process according to any one of the preceding claims, characterised by the fact that a hub is previously formed at the centre of the disc and is integral with it.

7. Pulley in one piece, with multiple V-grooves manufactured according to a process according to any one of claims 1 to 6, characterised by the fact that it consists of a cylindrical flange (6, 26) formed by a flowing of the metal which has at least one series of grooves and projects either side of a central hub (1, 20), the thickness of which is independent of that of the flange.

8. Pulley according to claim 7, characterised by the fact that the thickness of the flange which has the grooves is greater than that of the web.

9. Pulley according to claim 7, characterised by the fact that the thickness of the flange (26) which has the grooves is less than that of the web.

10. Pulley according to any one of claims 7 to 9, characterised by the fact that it consists of several series of V-grooves.

## Claims for the contracting States DE, GB, IT, AT

1. Process of manufacturing a pulley with multiple V-grooves, according to which the peripheral portion of a circular flat disc (1) is transformed into an annular flange which is coaxial to the initial disc, projecting either side of a central web, then grooves are formed in the exterior face of this flange, characterised by the fact that it consists of bending the metal of the peripheral portion of the disc (1) on either side of its general plane, until a cylindrical flange (6) is formed, at least one series of V-grooves (8, 14, 15) being then formed into the exterior face of this cylindrical flange.

2. Process according to claim 1, characterised by the fact that a thickness which is different from that of the central web (1) is imparted to the cylindrical flange (6).

3. Process according to any one of the claims 1 and 2, characterised by the fact that the metal of the peripheral portion of the disc (1) is made to form on either side of its initial plane by pushing it by means of cylindrical rollers (3).

4. Process according to claim 3, characterised by the fact that the initial disc has a diameter greater than that of the pulley which is to be made, increased by the height of the flange above this web, in such a way that the thickness of the flange is independent of that of the web of the pulley.

5. Process according to any one of claims 1 and 2, characterised by the fact that first of all the peripheral portion of the disc (20) is split perpendicularly to its axis, then the metal of the two lips (24, 25) of the split is spun by extending the one from the other to form a cylindrical flange (26).

6. Process according to any one of the preceding claims, characterised by the fact that a hub is previously formed at the centre of the disc and is integral with it.

7. Pulley in one piece, with multiple V-grooves and with a central web manufactured according to a process according to any one of claims 1 to 6, characterised by the fact that it consists of a cylindrical flange (6, 26) formed by a bending of the metal which has at least one series of grooves and projects either side of a central hub (1, 20), the thickness of which is independent of that of the flange.

8. Pulley according to claim 7, characterised by the fact that the thickness of the flange which has the grooves is greater than that of the web.

9. Pulley according to claim 7, characterised by the fact that the thickness of the flange (26) which has the grooves is less than that of the web.

10. Pulley according to any one of claims 7 to 9, characterised by the fact that it consists of several series of V-grooves.

FIG.2

FIG.1

FIG.3

FIG.4

FIG.5